# EUROPÄISCHE PATENTANMELDUNG

(11) **EP 1 808 250 A1**
(43) Veröffentlichungstag der Anmeldung: **18.07.2007**
(21) Anmeldenummer: 07000159.9
(22) Anmeldetag: 05.01.2007
(51) Int. Cl.: B23D 61/12, B23D 61/02, B23D 65/00, B27B 33/02

(54) **Sägeblatt mit einem Grundkörper und Zähnen mit einer Schneide mit einer Verschleissschutzschicht**

(30) Priorität: 13.01.2006 DE 102006001816
(71) Anmelder: WIKUS-Sägenfabrik Wilhelm H. Kullmann GmbH & Co. KG., 34286 Spangenberg (DE)
(72) Erfinder: Kullmann, Jörg H., Dr., 34286 Spangenberg (DE); Kwanka, Werner, Dr., 34246 Vellmar (DE)
(74) Vertreter: Rehberg Hüppe + Partner

(57) **Zusammenfassung**

Ein Sägeblatt (15) weist einen Grundkörper (16) und eine Mehrzahl von Zähnen (1) mit jeweils einer Schneide (2) geometrisch bestimmter Schneidenform mit einer Schneidkante (3) auf, wobei die Schneide (2) mit einer sich über die Schneidkante (3) erstreckenden Verschleißschutzschicht (7) versehen ist. Die Schneidkante (3) der Schneide (2) besitzt bezogen auf einen Zustand ohne Verschleißschutzschicht (7) einen Kantenradius (4) zwischen etwa 0,005 mm und 0,045 mm. Das Sägeblatt (15) wird mit den Schritten hergestellt: Schleifen des Zahns (1) zum Herstellen einer Schneide (2) geometrisch bestimmter Schneidenform mit einer Schneidkante (3); Nachbearbeiten der Schneide (2) derart, dass die Schneidkante (3) einen Kantenradius (4) zwischen etwa 0,005 mm und 0,045 mm, insbesondere zwischen etwa 0,010 mm und 0,025 mm, aufweist; und Aufbringen einer Verschleißschutzschicht (7) auf die Schneide (2) derart, dass sich die Verschleißschutzschicht (7) über die Schneidkante (3) erstreckt.

## Beschreibung

Die Erfindung betrifft ein Sägeblatt mit einem Grundkörper und einer Mehrzahl von Zähnen mit jeweils einer Schneide geometrisch bestimmter Schneidenform mit einer Schneidkante, wobei die Schneide mit einer sich über die Schneidkante erstreckenden Verschleißschutzschicht versehen ist.

Insbesondere handelt es sich bei dem Sägeblatt um ein Sägeband oder ein Kreissägeblatt. Insbesondere bestehen zumindest die Zähne mindestens teilweise aus Hartmetall.

Unter spanend arbeitenden Trennverfahren mit einer Schneide mit geometrisch bestimmter Schneidenform sind dabei in dieser Anmeldung im Sinne der DIN 8580 Drehen, Bohren, Fräsen, Hobeln, Räumen, Sägen und Feilen zu verstehen. Als spanend arbeitende Trennverfahren mit einer Schneide mit geometrisch unbestimmter Schneidenform sind u. a. Schleifen, Honen und Läppen anzusehen.

### STAND DER TECHNIK

Aus dem Internetauftritt der Tungsten Tool & Saw Co., Toronto, Kanada unter **http://www.tungstentool.com/amada_aurora.html** ist ein Sägeband mit einem Grundkörper und einer Mehrzahl von Zähnen mit jeweils einer Schneide geometrisch bestimmter Schneidenform mit einer Schneidkante bekannt, wobei die Schneide mit einer sich über die Schneidkante erstreckenden Verschleißschutzschicht versehen ist. Die Verschleißschutzschicht besteht aus Titannitrid (TiN). Bei diesem bekannten Sägeband besteht das Problem, dass sich die Verschleißschutzschicht im Betrieb des Sägebands bereits nach relativ kurzer Zeit von den Zähnen ablöst und somit die Verschleiß reduzierenden Eigenschaften verloren gehen.

### AUFGABE DER ERFINDUNG

Der Erfindung liegt die Aufgabe zugrunde, ein Sägeblatt der eingangs beschriebenen Art bereitzustellen, dessen Zähne und insbesondere deren Schneide so gestaltet sind, dass sie im Vergleich zum Stand der Technik länger und besser gegen Verschleiß geschützt sind.

### LÖSUNG

Die Aufgabe wird erfindungsgemäß mit den Merkmalen des unabhängigen Patentanspruchs 1 bzw. 10 gelöst.

Demnach weist die Schneidkante der Schneide bezogen auf einen Zustand ohne Verschleißschutzschicht einen Kantenradius zwischen etwa 0,005 mm und 0,045 mm auf.

### WEITERER STAND DER TECHNIK

Aus dem Internetauftritt der unter der Marke "LENOX" auftretenden American Saw & Mfg. Company, East Longmeadow, USA, unter **http://www.lenoxsaw.com/armor_blk.html** ist ein Sägeband mit einem Grundkörper und einer Mehrzahl von Zähnen mit jeweils einer Schneide geometrisch bestimmter Schneidenform mit einer Schneidkante bekannt, wobei die Schneide mit einer sich über die Schneidkante erstreckenden Verschleißschutzschicht versehen ist. Die Verschleißschutzschicht besteht aus Aluminiumtitannitrid (AITiN). Bei diesem bekannten Sägeband besteht das Problem, dass sich die Verschleißschutzschicht im Betrieb des Sägebands bereits nach relativ kurzer Zeit von den Zähnen ablöst und somit die Verschleiß reduzierenden Eigenschaften verloren gehen.

Aus dem Internetauftritt der unter der Marke "LENOX" auftretenden American Saw & Mfg. Company, East Longmeadow, USA, unter **http://www.lenoxsaw.com/armor_gold.html** ist ein weiteres Sägeband mit einem Grundkörper und einer Mehrzahl von Zähnen mit jeweils einer Schneide geometrisch bestimmter Schneidenform mit einer Schneidkante bekannt, wobei die Schneide mit einer sich über die Schneidkante erstreckenden Verschleißschutzschicht versehen ist. Die Verschleißschutzschicht besteht in diesem Fall aus Titannitrid (TiN). Auch bei diesem bekannten Sägeband besteht das Problem, dass sich die Verschleißschutzschicht im Betrieb des Sägebands bereits nach relativ kurzer Zeit von den Zähnen ablöst und somit die Verschleiß reduzierenden Eigenschaften verloren gehen.

Aus der deutschen Patentschrift DE 43 00 622 C2 ist weiterhin ein Sägeblatt mit einem Grundkörper und einer Mehrzahl von Zähnen mit jeweils einer Schneide geometrisch bestimmter Schneidenform mit einer Schneidkante bekannt. Die Zähne können mit Hartmetall bestückt sein, wobei diese Einsatzstücke aus Hartmetall durch einen Schleifvorgang, insbesondere im Bereich der Schneidkante, ihre endgültige Gestalt erhalten. Besondere Maßnahmen zur Reduzierung des Verschleißes sind nicht vorgesehen.

Aus dem **Prospekt "**Präzisionssägebänder", Ausgabe 2005, Seiten 44-46, der Anmelderin sind Sägebänder bekannt, die einen Grundkörper aufweisen, der im Bereich der kontinuierlichen oder auch unterbrochen ausgebildeten Kante mit einer galvanischen Beschichtung aus Diamantpartikeln versehen sind. Es handelt sich demnach um ein Sägeband mit einer Vielzahl von durch die Diamantpartikel gebildeten Schneiden geometrisch unbestimmter Schneidenform. Zähne im Sinne von aus dem Grundkörper hervorstehenden Elementen mit einem Spanwinkel sind nicht vorhanden. Solche Sägebänder mit Schneiden geometrisch unbestimmter Schneidenform arbeiten eher schleifend. Die Dicke der galvanischen Beschichtung beträgt etwa 0,3 mm bis 0,4 mm. Die Diamantpartikel sind in einer Nickelschicht gehalten und verankert. Dennoch ergibt sich eine unzureichende Haftung auf dem Material des Grundkörpers, so dass sich im Einsatz solcher Sägebänder im Bereich der Schneiden Ausbröckelerscheinungen zeigen.

Weiterhin sind aus dem Internetauftritt der Plasma + Rubber - coatings AG, Schaan, Liechtenstein unter **http://www.rhenotherm.de/Dlcdlc.html** spanend arbeitende Werkzeuge mit geometrisch bestimmter Schneidenform, nämlich Bohrer, bekannt, die im Bereich ihres Grundkörpers mit einer Verschleißschutzschicht versehen sind. Bei der Verschleißschutzschicht handelt es sich um eine DLC-Schicht (DLC = Diamond-Like Carbon), die hart und spröde ist. Die DLC-Schicht besitzt einen kleinen Reibbeiwert, so dass bei ihrem Einsatz der Spanfluss vergleichsweise wenig gestört wird und sich während des Einsatzes auch vorteilhaft nur eine mäßige Temperaturerhöhung einstellt. Das Aufbringen der DLC-Schicht erfolgt durch chemische Gasphasenabscheidung (CVD).

Wie im Stand der Technik allgemein bekannt ist, wird der oberhalb beschriebene CVD-Prozess zumeist bei reduziertem Druck und hohen Temperaturen durchgeführt. Er findet seine Grenze in der Temperaturbelastbarkeit des Materials des Grundkörpers, so dass die Anwendung auf solche spanend arbeitenden Werkzeuge - wie Bohrer - begrenzt ist, für die die geometrischen Abmessungen einer Schneide in einem bestimmten Verhältnis zur Spandicke stehen. Für solche Bohrer sind Schneidkanten mit einem Kantenradius zwischen 0,060 mm und 0,200 mm typisch. Hierzu gehören Spandicken in der Größenordnung von etwa 0,200 bis 0,800 mm. Diese Verhältnisse unterscheiden sich grundlegend von den geometrischen Bedingungen, wie sie beim Sägen mit Sägeblättern gegeben sind.

Weiterhin sind allgemein im Stand der Technik Sägeblätter mit einem Grundkörper und einer Mehrzahl von Zähnen mit jeweils einer Schneide geometrisch bestimmter Schneidenform mit einer Schneidkante bekannt. Die Schneide besteht aus Hartmetall und wird durch Schleifen von Zahnbrust und Zahnrücken nachbearbeitet. Im geschliffenen Zustand von Zahnbrust und Zahnrücken ergibt sich im Mittel ein "Kantenradius" zwischen 0,005 und 0,010 mm. Es handelt sich aber eher um eine sich zufällig ergebende Schartigkeit der Schneide. Die Schneidkante selbst wird nicht bearbeitet. In einer solchen Größenordnung und einer derartigen zufälligen unregelmäßigen Geometrie erscheint es wenig angebracht, von einem Kantenradius zu sprechen. Die zugehörige Spandicke liegt in der Größenordnung von etwa 0,003 mm bis 0,020 mm. Besondere Maßnahmen zur Reduzierung des Verschleißes sind nicht vorgesehen.

### BESCHREIBUNG DER ERFINDUNG

Die Erfindung betrifft ein Sägeblatt mit einem Grundkörper und einer Mehrzahl von Zähnen mit jeweils einer Schneide geometrisch bestimmter Schneidenform mit einer Schneidkante, wobei die Schneide mit einer sich über die Schneidkante erstreckenden Verschleißschutzschicht versehen ist und wobei die Schneidkante der Schneide bezogen auf einen Zustand ohne Verschleißschutzschicht einen Kantenradius zwischen etwa 0,005 mm und 0,045 mm aufweist.

Die Erfindung betrifft weiterhin ein Verfahren zum Herstellen eines Sägeblatts mit einem Grundkörper und einer Mehrzahl von Zähnen mit den Schritten:
- Schleifen des Zahns zum Herstellen einer Schneide geometrisch bestimmter Schneidenform mit einer Schneidkante,
- Nachbearbeiten der Schneide derart, dass die Schneidkante einen Kantenradius zwischen etwa 0,005 mm und 0,045 mm, insbesondere zwischen etwa 0,010 mm und 0,025 mm, aufweist, und
- Aufbringen einer Verschleißschutzschicht auf die Schneide derart, dass sich die Verschleißschutzschicht über die Schneidkante erstreckt.

Der Erfindung liegt die überraschende Erkenntnis zugrunde, dass zur Verbesserung der Verschleißeigenschaften eines Sägeblatts dieses zunächst bewusst und in definierter Weise einem ganz bestimmten "Verschleiß" auszusetzen ist. Anschließend kann die Verschleißschutzschicht aufgebracht werden und haftet deutlich besser und länger an der Schneide, als dies bei der unbearbeitenden, unregelmäßigen und scharfkantigen Schneidkante der Fall ist, wie diese im Stand der Technik bekannt ist. Der definierte Verschleiß besteht genauer gesagt in der Anbringung eines Kantenradius an der Schneidkante der Schneide des Sägeblatts, der zwischen etwa 0,005 mm und 0,045 mm beträgt. Diese Größenangabe bezieht sich auf einen Zustand des Sägeblatts ohne aufgebrachte Verschleißschutzschicht. Es versteht sich, dass nach dem Aufbringen der Verschleißschutzschicht diese mit ihrer äußeren Oberfläche die effektive Schneide und Schneidkante bildet, an der sich in Abhängigkeit von der Dicke der Verschleißschutzschicht ein anderer (größerer) effektiver Kantenradius ergibt.

Zunächst ist zu beachten, dass beim Sägen von Werkstoffen - verglichen mit anderen ebenfalls spanend arbeitenden Trennverfahren mit einer Schneide geometrisch bestimmter Schneidenform, z. B. Bohren oder Fräsen - vergleichsweise feine Späne abgetragen werden sollten. Die beim Sägen aufzuwendenden Schnittkräfte verlaufen in weiten Bereichen proportional zur Spandicke. Gröbere Späne erfordern also höhere Schnittkräfte als feine Späne. Es entspricht der Erkenntnis der Anmelderin, dass eine zu erzeugende effektive Spandicke beim Sägen, die in der Größenordnung von etwa 0,015 mm bis 0,030 mm liegt, günstige Arbeitsergebnisse liefert. Unter effektiver Spandicke ist der tatsächliche Vorschub pro Zahn - im Unterschied zu einem theoretischen Vorschub pro Zahn - zu verstehen. Der tatsächliche Vorschub pro Zahn ergibt sich durch die Aufteilung des Schnittkanals in Zerspanungssegmente, die einzelnen Zähnen zugeordnet sind. Solche relativ feinen Späne ließen sich nach der bisherigen Kenntnis des Fachmanns nur mit Sägeblättern erzeugen, die sehr scharfkantig ausgebildete Schneidkanten besitzen. Dies bedeutet, dass der "Kantenradius" der Schneide an jedem Zahn sehr klein bemessen sein sollte. Wenn die Schneidkanten aus Hartmetall durch Schleifen von Zahnbrust und Zahnrücken hergestellt werden, lässt sich ein Sägeblatt mit vergleichsweise scharfen Zähnen gut erstellen. Die Zähne besitzen einen sehr kleinen Kantenradius, der etwa in der Größenordnung von 0,005 mm liegt. Es handelt sich aber eher um eine sich zufällig ergebende Schartigkeit der Schneide. Die Schneidkante selbst wird nicht bearbeitet. In einer solchen Größenordnung und bei einer derartigen zufälligen unregelmäßigen Geometrie erscheint es wenig angebracht, überhaupt von einem Kantenradius zu sprechen.

Der Erfindung liegt weiterhin die Erkenntnis zugrunde, dass es sinnvoll ist, die Eigenschaften von Sägeblättern dadurch zu verbessern, dass auf den Schneiden der Zähne zumindest über den Bereich der Schneidkante mindestens eine Verschleißschutzschicht aufgetragen wird. Die Verschleißschutzschicht kann sich auch über die gesamte Schneide, den gesamten Zahn, einen Teil des Grundkörpers oder auch im Extremfall über das gesamte Sägeblatt erstrecken. Bevorzugt ist jedoch eine Ausbildung, bei der sich die Verschleißschutzschicht über die gesamte Schneide und einen Teil des Grundkörpers erstreckt. Diese Verschleißschutzschicht soll aber im Gegensatz zum Stand der Technik entsprechend der vorgesehenen Lebensdauer der Sägeblätter auf dem Material des Grundkörpers bzw. der Zähne hinreichend gut haften. Die Verschleißschutzschicht wird so ausgewählt, dass sie verbesserte Eigenschaften beim Sägen erbringt. Beispielsweise soll eine solche Verschleißschutzschicht eine höhere Härte und damit einen verbesserten Widerstand gegen Abrasion erbringen, damit längere Standzeiten des Sägeblatts erzielt werden können. Es ist auch vorteilhaft, wenn der Reibungsbeiwert einer solchen Verschleißschutzschicht relativ gering ist, damit ein guter Abfluss der Späne beim Sägen und eine geringe Erwärmung des Sägeblatts selbst die Folge sind.

Die Haftung solcher Verschleißschutzschichten im Bereich der scharfkantigen Schneidkante der Schneide eines Zahnes ist bei Sägeblättern des Stands der Technik den erfindungsgemäßen Erkenntnissen nach jedoch problematisch. Dies gilt insbesondere dann, wenn kleine Kantenradien vorliegen, etwa solche im Bereich zwischen 0,005 mm und 0,010 mm. Hier entstehen in den aufgebrachten Verschleißschutzschichten des Stands der Technik Spannungen, die dazu führen können, dass die Verschleißschutzschichten nicht dauerhaft haften, sondern im Extremfall sich in Folge des Lösens der Eigenspannungen selbst sehr schnell von der Oberfläche ablösen. Auch einwirkende Kräfte beim Sägen können einen solchen Ablöseprozess von Verschleißschutzschichten im Stand der Technik auslösen oder zumindest fördern, so dass sich keine hinreichenden Standzeiten für solche bekannten Sägeblätter ergeben.

Die Erfindung stellt nun eine bewusste Abkehr von dem Ziel der Erreichung möglichst scharfkantig ausgebildete Schneidkanten dar. Mit der Erfindung werden die geometrischen Bedingungen im Bereich der Schneidkante auf Wertebereiche eingegrenzt, die ein Optimum zwischen den gegensätzlichen Forderungen an ein scharfes Sägeblatt einerseits und eine hinreichende Haftung der Verschleißschutzschicht andererseits erreichen lassen. Dieses Optimum ist abgestimmt auf eine Spandicke im Bereich zwischen 0,015 und 0,030 mm. Es wird ein Kantenradius gewählt, der etwas größer ist als der Kantenradius, der durch einen Schleifvorgang erzeugbar ist. Durch diesen insoweit vergrößerten Kantenradius verliert das Sägeblatt an Scharfheit. Der Kantenradius wird in einem Bereich zwischen 0,004 mm und 0,05 mm festgelegt. Besonders gute Arbeitsergebnisse werden dann erreicht, wenn der Kantenradius zwischen 0,010 mm und 0,025 mm beträgt. Es versteht sich, dass es sich mikroskopisch um keinen exakten Radius handelt, da ein solcher exakter Radius in der Praxis nicht herstellbar ist. Der mittlere Radius liegt jedoch in dem genannten Zahlenbereich. Als Radius ist in dieser Anmeldung auch eine andere gekrümmte Gestaltung zu verstehen, die zu einem Verlassen der scharfkantigen Form der unbearbeiteten Schneidkante führt. Hierdurch ergibt sich ein hinreichendes Haftungsvermögen der Verschleißschutzschicht mit entsprechender Lebensdauer des Sägeblatts. Gleichzeitig tritt im Vergleich zu Sägeblättern des Stands der Technik eine Reduzierung der Schnittkraft zu einem Vergleichszeitpunkt nach einer bestimmten Einsatzdauer des erfindungsgemäßen Sägeblatts und eines Sägeblatts des Stands der Technik ein, da die aufgezeigten Bereiche der Kantenradien bei dem erfindungsgemäßen Sägeblatt dann immer noch kleiner sind als bei (zu diesem Vergleichszeitpunkt bereits stärker abgenutzten) Sägeblättern des Stands der Technik.

Die Schneide des Sägeblatts besteht vorzugsweise aus Hartmetall, also insbesondere einem Stahl, der mit Wolfram und/oder Kobalt legiert ist. Dabei ist Wolfram der eigentliche Hartstoff und Kobalt - sowie ggf. andere Legierungselemente - der Binder. Es können aber auch z. B. Hochleistungsschnellarbeitsstähle (HSS) Verwendung finden. Die Verschleißschutzschicht kann aus Hartstoff bestehen. Darunter sind insbesondere TiN, TiCN, TiAIN, CrN und DLC zu verstehen. Die Verschleißschutzschicht kann ein- oder mehrschichtig aufgebaut sein. Bei einem einschichtigen Aufbau besteht die Verschleißschutzschicht insbesondere aus TiN, TiCN, TiAIN oder CrN. Auch mehrere unterschiedliche Schichten - z. B. 2, 3 oder 4 Schichten - können insgesamt die Verschleißschutzschicht bilden. Bei einem solchen mehrschichtigen Aufbau besteht die mindestens eine Zwischenschicht insbesondere aus TiN, TiCN, TiAIN oder CrN und die auf der Zwischenschicht angeordnete Oberflächenschicht insbesondere aus DLC. Die Verschleißschutzschicht wird vorzugsweise durch physikalische Gasphasenabscheidung (PVD) aufgebracht. Dies gilt bei einem mehrschichtigen Aufbau sowohl für die Oberflächenschicht als auch die mindestens eine Zwischenschicht.

In der Regel werden die Schneiden der Zähne des erfindungsgemäßen Sägeblatts durch Schleifen hergestellt. An das Schleifen schließt sich eine Nachbehandlung an, die darauf gerichtet ist, eine verringerte Schartigkeit der Schneidkante zu erzielen bzw. den Kantenradius anzuheben und eine gewisse Verrundung bzw. Abrundung der Schneidkante zu schaffen, bevor die Verschleißschutzschicht aufgebracht wird. Diese auf die Verringerung der Schartigkeit und die Abrundung zielende Nachbehandlung kann insbesondere durch Bürsten, Strahlen oder Entgraten erfolgen, also durch Maßnahmen, die eine Verrundungswirkung und eine Einebnungswirkung auf die Schneidkante ausüben. Die Nachbehandlung ist allerdings so zu begrenzen, dass keine stumpfen Sägeblätter entstehen, also keine solchen Sägeblätter, wie sie durch Verschleiß gegen Ende ihrer Einsatzzeit gegeben sind. Es sollten auch Eigenschaften von Sägeblättern vermieden werden, bei denen die abzunehmenden Spandicken relativ groß sind, also etwa im Bereich von 0,060 mm.

Das Material des Grundkörpers des Sägeblatts ist vorzugsweise Hartmetall. Bei dem Sägeblatt handelt es sich insbesondere um ein Sägeband oder ein Kreissägeblatt. Der Grundkörper ist bei einem Sägeband der Bandrücken, aus dem die Zähne hervorstehen. Die Zähne sind dann ebenfalls aus Hartmetall ausgebildet und werden zunächst durch Fräsen und dann durch Schleifen erstellt und bearbeitet. Die Zähne können jedoch auch lediglich Einsätze aus Hartmetall aufweisen, wobei in diesem Fall die Zähne (ohne Einsätze) und der Grundkörper aus einem weicheren Material bestehen, z. B. aus Stahl. Die Einsätze aus Hartmetall können ferner mit PKD (Polykristalliner Diamant) bestückt sein. Die Zähne werden anschließend nachbehandelt. Damit wird die geometrische Gestalt der Schneide festgelegt, bevor die Verschleißschutzschicht aufgebracht wird.

Mit besonderem Vorteil wird auf das Material des Grundkörpers bzw. das der Zähne im Bereich der Schneiden der Zähne eine mehrschichtige, insbesondere eine zweischichtige, Verschleißschutzschicht aufgebracht. Dabei wird vorzugsweise zunächst eine Zwischenschicht aus der aus TiN, TiCN, TiAIN und CrN bestehenden Gruppe aufgebracht. Die Schichtdicke der Zwischenschicht liegt vorzugsweise in der Größenordnung von etwa 0,002 mm bis 0,004 mm. Die Zwischenschicht hat die Aufgabe, die Haftung für eine Oberflächenschicht zu verbessern und gleichsam als Sperrschicht zwischen der Oberflächenschicht und dem Material des Grundkörpers bzw. des Zahns zu wirken. Dies gilt insbesondere dann, wenn als Oberflächenschicht eine bevorzugte DLC-Schicht vorgesehen ist. Auch die Oberflächenschicht hat vorzugsweise eine Schichtdicke von etwa 0,002 mm bis 0,004 mm. Damit ergeben sich am fertigen Zahn eine Schichtdicke der vollständigen (zweischichtigen) Verschleißschutzschicht von zwischen etwa 0,004 mm bis 0,008 mm und effektive Schneidkantenradien in einer Größenordnung von etwa 0,016 mm bis 0,031 mm, also genau solche im Bereich der vorgesehenen Spandicke.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer Übersichtsdarstellung einen Ausschnitt eines ersten Ausführungs-beispiels eines erfindungsgemäßen Sägeblatts in der Form eines Sägebands.
- **Fig. 2**: zeigt in einer Übersichtsdarstellung einen Ausschnitt eines zweiten Ausführungs-beispiels eines erfindungsgemäßen Sägeblatts in der Form eines Sägebands mit Hartmetalleinsätzen.
- **Fig. 3**: zeigt ein drittes Ausführungsbeispiel eines erfindungsgemäßen Sägeblatts in der Form eines Kreissägeblatts.
- **Fig. 4**: zeigt eine stark vergrößerte Darstellung der Spitze eines Zahns während des Sägevorgangs.
- **Fig. 5**: zeigt eine noch stärker vergrößerte Darstellung der Spitze eines bereits teilweise verschlissenen Zahns während des Sägevorgangs.
- **Fig. 6**: zeigt ein Diagramm des Verlaufs der Schnittkraft und des Haftungsvermögens einer Verschleißschutzschicht über den Kantenradius.
- **Fig. 7**: zeigt eine mikroskopische Aufnahme der Spitze eines mit einer Verschleißschutzschicht versehenen Zahns eines erfindungsgemäßen Sägeblatts.

### FIGURENBESCHREIBUNG

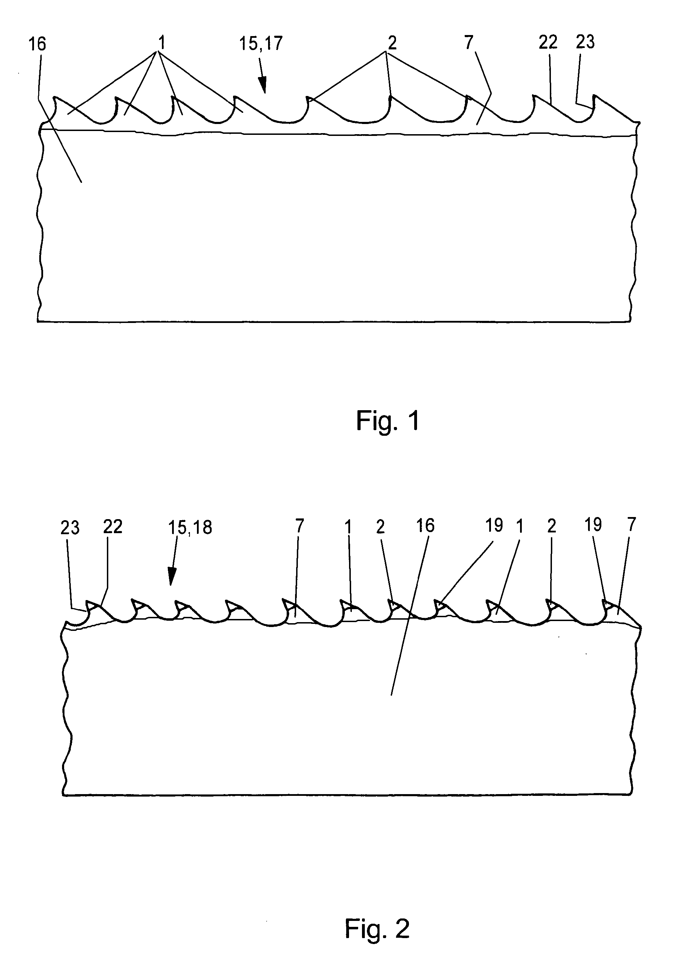

**Fig. 1** zeigt in einer Übersichtsdarstellung einen Ausschnitt eines ersten Ausführungsbeispiels eines erfindungsgemäßen Sägeblatts 15 in der Form eines Sägebands 17. Das Sägeblatt 15 weist einen Grundkörper 16 und einer Mehrzahl von Zähnen 1 auf. Fig. 1 zeigt dabei nur einen Ausschnitt des Sägeblatts 15, so dass auch nur ein Teil seines Grundkörpers 16 und nur ein Teil der Zähne 1 sichtbar sind. Es versteht sich, dass der Grundkörper 16 entlang seiner Erstreckung weitere Zähne 1 aufweist.

**Fig. 2** zeigt in einer Übersichtsdarstellung einen Ausschnitt eines zweiten Ausführungsbeispiels eines erfindungsgemäßen Sägeblatts 15 in der Form eines Sägebands 18 mit Hartmetalleinsätzen 19. Die Hartmetalleinsätze 19 können auch eine andere Geometrie aufweisen.

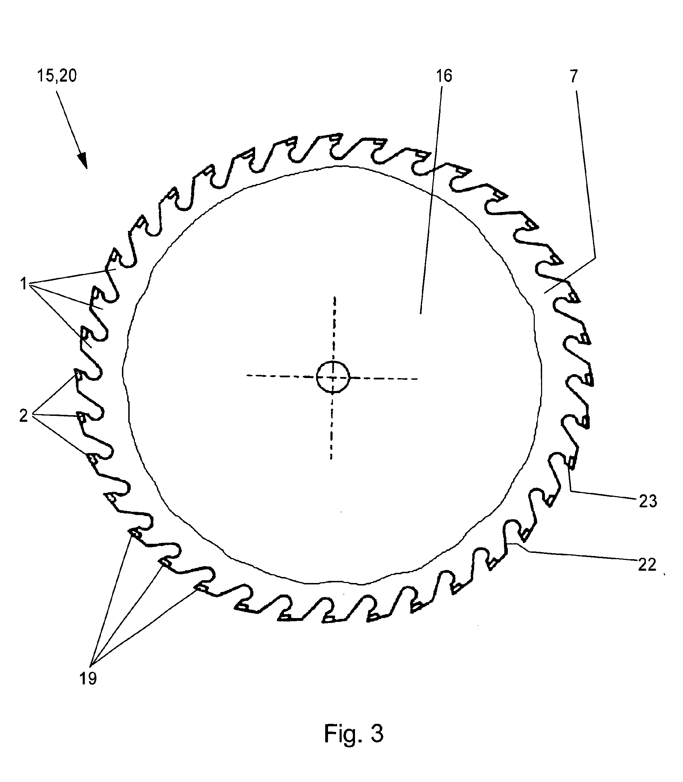

**Fig. 3** zeigt ein drittes Ausführungsbeispiel eines erfindungsgemäßen Sägeblatts 15 in der Form eines Kreissägeblatts 20. Das Kreissägeblatt 20 könnte ebenfalls Hartmetalleinsätze aufweisen.

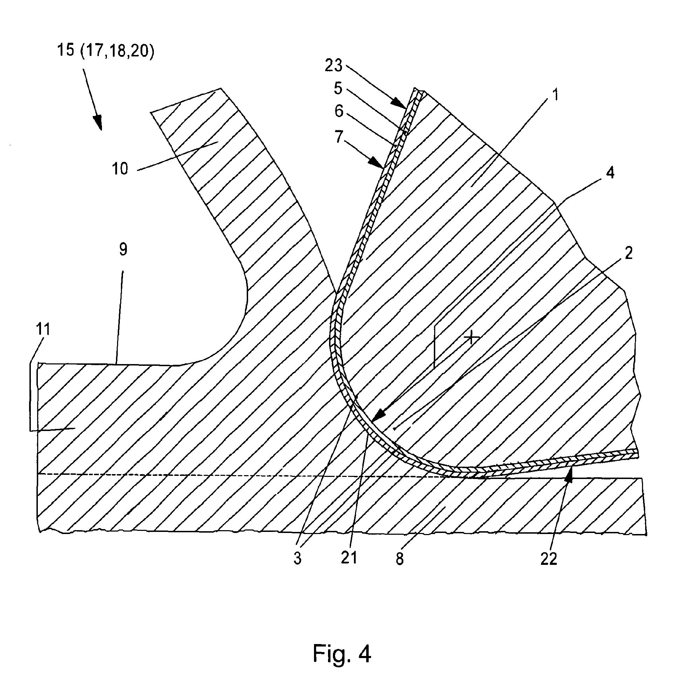

**Fig. 4** zeigt eine stark vergrößerte Darstellung der Spitze eines Zahns 1 während des Sägevorgangs. Es handelt sich dabei um einen beispielhaften Zahn 1 einer der in den Figuren 1-3 dargestellten Ausführungsformen des Sägeblatts 15. Der Zahn 1 weist eine Schneide 2 auf. Der Zahn 1 besteht zumindest teilweise aus Hartmetall, welches sich über den gesamten Bereich seiner Schneide 2 erstreckt. Die Schneide 2 endet in einer Schneidkante 3 mit zugehörigem Kantenradius 4. Der Kantenradius 4 liegt in einem Bereich zwischen 0,005 mm und 0,045 mm, genauer gesagt zwischen 0,010 mm und 0,025 mm. Er ist durch Schleifen hergestellt und durch eine Nachbehandlung auf den angegebenen Bereich begrenzt. An die Schneidkante 3 schließen der Zahnrücken 22 und die Zahnbrust 23 an.

Auf die derart vorgebildete Schneide 2 geometrisch bestimmter Schneidenform ist zunächst eine Zwischenschicht 5 und darauf eine Oberflächenschicht 6 aufgebracht, die gemeinsam eine Verschleißschutzschicht 7 bilden. In diesem Fall ergibt sich demnach eine Verschleißschutzschicht 7, die zweischichtig aufgebaut ist. Es versteht sich, dass die Verschleißschutzschicht 7 auch aus einer einzelnen Schicht oder aus mehr als zwei Schichten bestehen kann. Im vorliegenden Fall weist die Zwischenschicht 5 Titannitrid (TiN) und die Oberflächenschicht 6 DLC (Diamond-Like Carbon) auf. Beide Schichten 5, 6 wurden mittels physikalischer Gasphasenabscheidung (PVD) nacheinander aufgebracht. Die äußere Oberfläche der Verschleißschutzschicht 7 bildet somit beim Sägen die effektive Schneidkante.

Ein solches erfindungsgemäßes Sägeblatt 15 mit einer Vielzahl solcher Zähne 1 dringt beim Sägen in den Werkstoff eines Werkstückes 8 von der Seite seiner Oberfläche 9 her ein und nimmt dabei einen Span 10 bzw. eine Folge von Spänen 10 ab. Es ergibt sich eine Spandicke 11. Die Spandicke 11 wird in einer Dimension im Bereich zwischen 0,015 mm und 0,030 mm angestrebt, relativ zu den beschriebenen Abmessungen der Schneide 2 bzw. der Schneidkante 3. Es ist erkennbar, dass der Kantenradius 4 in einem Bereich liegt, der in etwa dem Bereich der Spandicke 11 entspricht. Der Bereich kann gleich oder geringfügig kleiner als der Bereich der Spandicke 11 sein. Damit wird erreicht, dass das Sägeblatt 15 mit noch hinreichend scharfen Zähnen 1 ausgestattet ist, die relativ feine Späne 11 von dem Werkstück 8 abnehmen, wobei vorteilhaft die benötigte Schnittkraft gering gehalten wird und sich durch die Eigenschaften der Oberflächenschicht 6 ein leichter Späneabfluss und eine geringe Erwärmung der Zähne 1 ergibt. Dennoch haftet die Verschleißschutzschicht 7 sicher an den Zähnen 1.

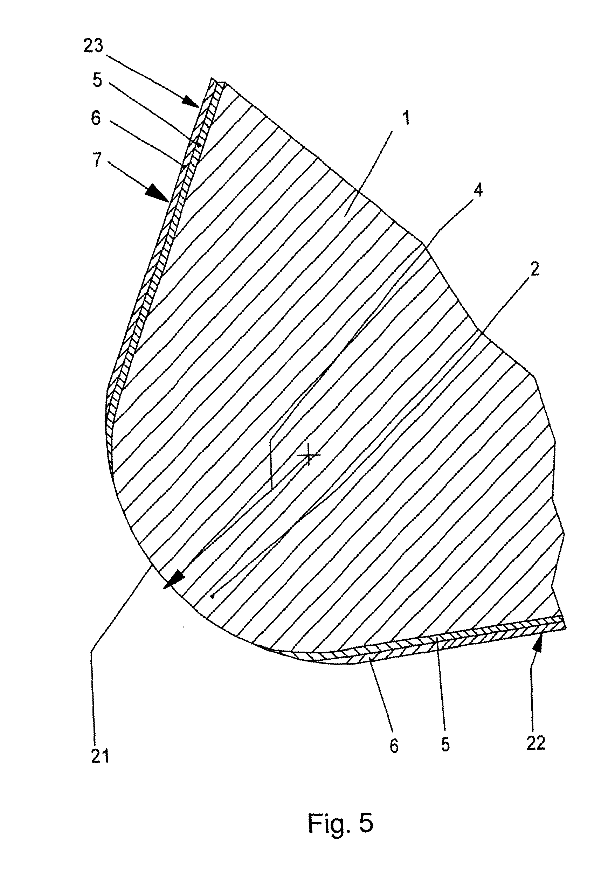

**Fig. 5** zeigt eine noch stärker vergrößerte Darstellung der Spitze des Zahns 1 gemäß Fig. 1 während des Sägevorgangs. Es ist jedoch ein Zustand dargestellt, in dem das Sägeblatt 15 bereits eine gewisse Einsatzdauer hinter sich gebracht hat. Dementsprechend ist erkennbar, dass die Verschleißschutzschicht 7 bereits zu einem Teil abgetragen wurde. Auch die Schneide 2 weist nicht mehr ihre ursprüngliche Geometrie auf. Fig. 5 zeigt jedoch ebenfalls, dass Teile der Verschleißschutzschicht 7 noch bestehen und weiterhin mit den Spänen in Verbindung stehen. Folglich erbringt die Verschleißschutzschicht 7 noch einen Teil ihrer Verschleiß hemmenden Wirkung, so dass sie auch in diesem Zustand noch die Lebensdauer des Sägeblatts 15 verlängert.

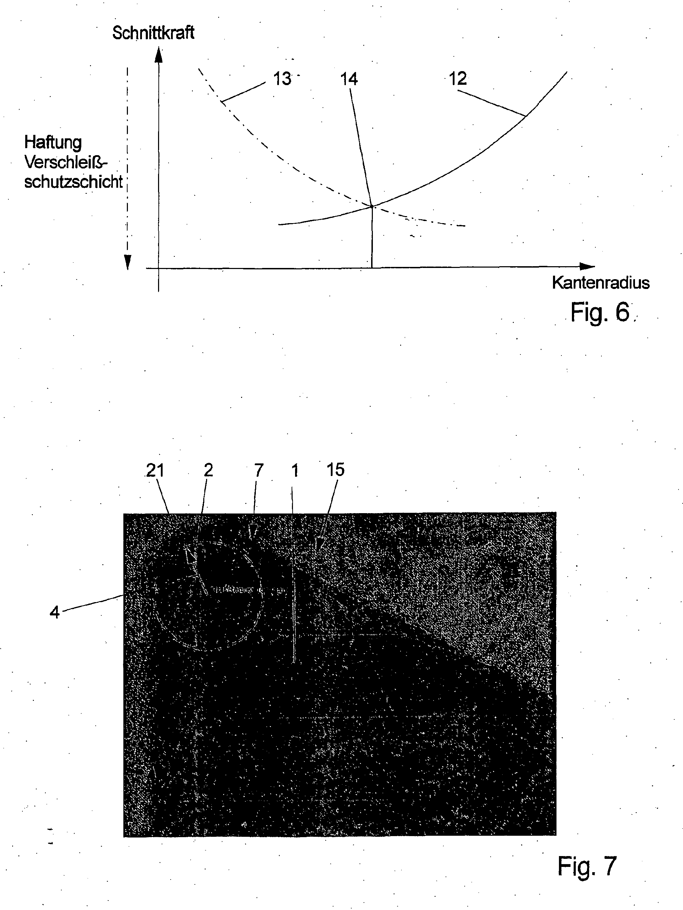

**Fig. 6** verdeutlicht in einem Diagramm schematisch die optimale Abstimmung der geometrischen Gestalt der Zähne 1 im Bereich der Schneide 2 bzw. der Schneidkante 3 auf das Haftungsvermögen der Verschleißschutzschicht 7. Das Diagramm dient lediglich zur Verdeutlichung der Tendenz. Auf der Abszisse ist der Kantenradius 4 aufgetragen. Auf der Ordinate sind einerseits die Schnittkraft und andererseits die Haftung der Verschleißschutzschicht 7 angegeben.

Es ergibt sich eine ansteigende durchgezogene Kurve 12, die die Schnittkraft verdeutlicht, die zum Schneiden in einem Werkstück 8 erforderlich ist. Mit steigendem Kantenradius 4 steigt auch die Schnittkraft an. Dies ergibt sich entsprechend der Beobachtung, dass ein durch Verschleiß verschlissenes stumpfes Sägeblatt 15 eine höhere Schnittkraft erfordert als ein neues, scharfes Sägeblatt 15. Bei einer sehr scharfkantigen Schneidkante 3 ist also die Schnittkraft vorteilhaft klein. Weiterhin zeigt die strichpunktierte Kurve 13, dass jedoch die Haftung der Verschleißschutzschicht 7 mit sinkendem Kantenradius 4 ebenfalls sinkt. Dies führt tendenziell dazu, dass die Verschleißschutzschicht 7 ihre Wirkung nicht in der gewünschten Weise erbringen kann. Aus diesen beiden gegenläufigen Tendenzen bzw. dem entsprechenden Verlauf der Kurven 12, 13 ergibt sich der Schnittpunkt 14. In diesem Schnittpunkt 14 herrschen optimale Bedingungen. Erfindungsgemäß liegt der Schnittpunkt 14 bei einem Kantenradius 4 von zwischen etwa 0,005 mm und 0,045 mm, insbesondere zwischen etwa 0,010 mm und 0,025 mm.

**Fig. 7** zeigt schließlich eine mikroskopische Aufnahme der Spitze eines mit einer Verschleißschutzschicht 7 versehenen Zahns 1 eines erfindungsgemäßen Sägeblatts 15. Der Kantenradius 4 beträgt etwa 0,016 mm. Es ist erkennbar, dass es sich mikroskopisch um keinen exakten Radius handelt, da ein solcher exakter Radius in der Praxis nicht herstellbar ist. Der mittlere Kantenradius 4 liegt jedoch bei dem genannten Wert.

### BEZUGSZEICHENLISTE

- 1: Zahn
- 2: Schneide
- 3: Schneidkante
- 4: Kantenradius
- 5: Zwischenschicht
- 6: Oberflächenschicht
- 7: Verschleißschutzschicht
- 8: Werkstück
- 9: Oberfläche
- 10: Span

- 20: Kreissägeblatt
- 21: effektive Schneidkante
- 22: Zahnrücken
- 23: Zahnbrust

- 11: Spandicke
- 12: Kurve
- 13: Kurve
- 14: Schnittpunkt
- 15: Sägeblatt
- 16: Grundkörper
- 17: Sägeband
- 18: Sägeband
- 19: Hartmetalleinsatz

## Patentansprüche

1. Sägeblatt mit einem Grundkörper (16) und einer Mehrzahl von Zähnen (1) mit jeweils einer Schneide (2) geometrisch bestimmter Schneidenform mit einer Schneidkante (3), wobei die Schneide (2) mit einer sich über die Schneidkante (3) erstreckenden Verschleißschutzschicht (7) versehen ist, **dadurch gekennzeichnet, dass** die Schneidkante (3) der Schneide (2) bezogen auf einen Zustand ohne Verschleißschutzschicht (7) einen Kantenradius (4) zwischen etwa 0,005 mm und 0,045 mm aufweist.

2. Sägeblatt nach Anspruch 1, **dadurch gekennzeichnet, dass** der Kantenradius (4) zwischen etwa 0,010 mm und 0,025 mm beträgt.

3. Sägeblatt nach Anspruch 1 oder 2, **dadurch gekennzeichnet, dass** der Grundkörper (16) des Sägeblattes (15) sowie die Zähne (1) aus Hartmetall bestehen und die Verschleißschutzschicht (7) Hartstoff aufweist.

4. Sägeblatt nach Anspruch 1 oder 2, **dadurch gekennzeichnet, dass** die Zähne (1) Einsätze (19) aus Hartmetall aufweisen und die Verschleißschutzschicht (7) aus Hartstoff besteht.

5. Sägeblatt nach einem der Ansprüche 1 bis 4, **dadurch gekennzeichnet, dass** die Verschleißschutzschicht (7) eine Schichtdicke von etwa 0,002 mm bis 0,008 mm aufweist.

6. Sägeblatt nach einem der Ansprüche 1 bis 5, **dadurch gekennzeichnet, dass** die Verschleißschutzschicht (7) mehrschichtig aufgebaut ist und eine der festen Verbindung mit der Schneide (2) dienende Zwischenschicht (5) und eine die Härte und Verschleißfestigkeit erbringende Oberflächenschicht (6) aufweist.

7. Sägeblatt nach Anspruch 6, **dadurch gekennzeichnet, dass** die Zwischenschicht (5) ein Material aus der aus TiN, TiCN, TiAIN und CrN bestehenden Gruppe und die Oberflächenschicht (6) DLC aufweist.

8. Sägeblatt nach Anspruch 7, **dadurch gekennzeichnet, dass** die Zwischenschicht (5) und/oder die Oberflächenschicht (6) eine Schichtdicke von jeweils etwa 0,002 bis 0,004 mm aufweist.

9. Sägeblatt nach einem der Ansprüche 1 bis 8, **dadurch gekennzeichnet, dass** der Kantenradius (4) der Schneidkante (3) der Schneide (2) entsprechend einem Schnittpunkt (14) aus dem Verlauf des Haftungsvermögens der Verschleißschutzschicht (7) auf der Schneide (2) und dem Verlauf der Schnittkraft gewählt ist.

10. Verfahren zum Herstellen eines Sägeblatts (15) mit einem Grundkörper (16) und einer Mehrzahl von Zähnen (1), mit den Schritten:
Schleifen des Zahns (1) zum Herstellen einer Schneide (2) geometrisch bestimmter Schneidenform mit einer Schneidkante (3),
Nachbearbeiten der Schneide (2) derart, dass die Schneidkante (3) einen Kantenradius (4) zwischen etwa 0,005 mm und 0,045 mm, insbesondere zwischen etwa 0,010 mm und 0,025 mm, aufweist, und
Aufbringen einer Verschleißschutzschicht (7) auf die Schneide (2) derart, dass sich die Verschleißschutzschicht (7) über die Schneidkante (3) erstreckt.

11. Verfahren nach Anspruch 10, **dadurch gekennzeichnet, dass** der Schritt des Nachbearbeitens durch Bürsten, Strahlen oder Entgraten realisiert wird.
